# EUROPEAN PATENT SPECIFICATION

(11) **EP 2 405 157 B1**
(45) Date of publication and mention of the grant of the patent: **12.06.2013**
(21) Application number: 11172474.6
(22) Date of filing: 04.07.2011
(51) Int. Cl.: F16H 3/72, B30B 1/26, B30B 15/14, F16H 57/031

(54) **Planetary transmission with two inputs and one output**
Planetengetriebe mit zwei Eingängen und einem Ausgang
Engrenage épicycloidal avec deux entrées et un sortie

(30) Priority: 05.07.2010 TR 201005410
(43) Date of publication of application: 11.01.2012
(73) Proprietor: Coskunoz Metal Form Makina Endüstrivec Tic A.S., Bursa (TR)
(72) Inventor: Yorukoglu, Sancar, Bursa (TR); Beypars, Murat, Bursa (TR)
(74) Representative: Kaya, Erdem

(56) References cited:
- EP-B1- 0 329 741
- WO-A1-2010/063329
- CN-A- 101 716 826
- DE-A1- 10 053 270
- JP-A- 2 298 676
- JP-A- 59 070 497
- US-A- 5 425 682

## Description

The present invention relates to power transmission mechanisms which combine the drive of two drive sources and thanks to this, which obtains an output from a single point.

### PRIOR ART

In production area, there are cases where the power obtained at the output has to be controlled dynamically.

Accordingly, presses known in the present art function with the kinetic power of the flywheel which is accelerated by an electric motor. Accordingly, the flywheel continuously rotates by the rotation movement of the motor, however, the flywheel spindle does not rotate. When the piece is desired to be pressed, the flywheel spindle begins rotating by means of a clutch control like a pedal. The rotation movement in the flywheel spindle is transferred to the eccentric spindle, which functions as a crank, by means of gears by decreasing the revolution number and by increasing the torque. The function of the eccentric spindle is to transform circular movement to linear movement. Thus, linear movement (it is called press movement distance or stroke in the related technical field) equal to the eccentricity of the crank spindle is realized to the movable ram connected to the rod arm which is connected to the press crank spindle.

In the abovementioned conventional presses, the movement of the ram can be controlled only by the clutching-releasing process and the control of the flywheel speed. Therefore, for instance during the pressing process, the speed of the ram can be controlled in a very limited manner or the ram cannot be stopped at certain points for certain duration. Therefore, with conventional presses, shaping processes are limited.

In order to prevent this drawback, in the related technical field, servo presses are provided. In servo presses, the movement and the speed of the ram is controlled by a powerful servo motor. However, servo presses are expensive machines because of the powerful servo motors they comprise and moreover, they are limited with the capacity of the servo motor.

In addition to the abovementioned details, power transmission mechanisms are provided in the present art which function with two input-one output principle. For instance, in the patent application US 5425682, a power transmission shaft is disclosed which is divided into a first shaft section adjacent to the flywheel and a second shaft section adjacent to a power take-off gear. Accordingly, a planetary gearing is arranged between the shaft sections and is adapted to be driven by a servo motor. A power take-off gear is mounted on an output section of the planetary gearing so as to transmit the power to drives. The servo motor controls the rotation of the output section of the planetary gearing to vary the rotation of the power take-off gear so that the action velocity of the slide or the like can be freely controlled and press working for different kinds of materials can be carried out. Thus, the rotation of the power take-off gear can be changed and as a result, the parameters like the movement speed of the ram can be controlled in the desired manner. The disadvantage of the invention disclosed in US 5425682 is that it has big dimensions.

As a result, because of the abovementioned disadvantages, a novelty is required in the related technical field.

JP 59-70497A discloses a movement transformation mechanism falling under the wording of the precharacterizing portion of claim 1.

### BRIEF DESCRIPTION OF THE INVENTION

The present invention is a novel movement transmission mechanism developed in order to eliminate above mentioned disadvantages and to bring new advantages to the relevant technical field.

An object of the subject matter invention is to provide a movement transmission mechanism which functions with respect to the two inputs one output principle.

Another object of the subject matter invention is to provide a compact movement transmission mechanism which provides the output revolution to be changed dynamically.

In order to realize all of the abovementioned objects and the objects obtained from the detailed description below, the subject matter invention is a movement transformation mechanism where independent power transfer can be realized to a work spindle from two separate drive sources. Said mechanism is comprising a flywheel rotated by the first drive source; a circular gear fixed to a hub part of said flywheel; a sun gear rotated by means of the second drive source; at least one planet gear which is positioned between said circular gear and sun gear; and a planet carrier which carries said sun gear and said planet gear and which is rotatably connected to said sun gear and to the flywheel. Thanks to this structure, the rotational energies of the flywheel and the sun gear are combined on the planet carrier and the output obtained from the planet carrier can be adjusted in the desired manner by changing the rotation direction and revolution of the flywheel and the sun gear.

The present invention is characterized in that it comprises at least one wedge in order to provide the fixation of the circular gear to the flywheel so that the circular gear does not rotate around the own axis thereof and

in order to fix the circular gear inside the hub part of the flywheel, a front flywheel cover which is placed to the hub part from the front side and which has a support surface rested onto the circular gear; and a rear flywheel cover which is placed to the hub part from the rear part and again which has a support surface rested onto the circular gear.

In a preferred embodiment of the present invention, said front cap comprises studs providing connection to the flywheel and correspondingly, the flywheel comprises stud housings through which said studs pass.

In another preferred embodiment of the present invention, there are connection housings whereon the studs exiting the other end of said stud housings are connected and which are embodied so as to correspond to the studs on the rear flywheel cover.

In another preferred embodiment of the present invention, there are at least three planet gears which are positioned peripherally so as not to contact with each other.

In another preferred embodiment of the present invention, the first drive source is an AC motor, the second drive source is a servo motor.

The structural and the characteristic features and all the advantages of the subject matter invention can be understood more precisely by means of the detailed explanation which is written with references to these figures and therefore, it had to be evaluated with the detailed explanation and figures that are explained below.

### BRIEF DESCRIPTION OF THE FIGURES

In Figure 1, the cross sectional perspective view of the subject matter power transmission mechanism is given.

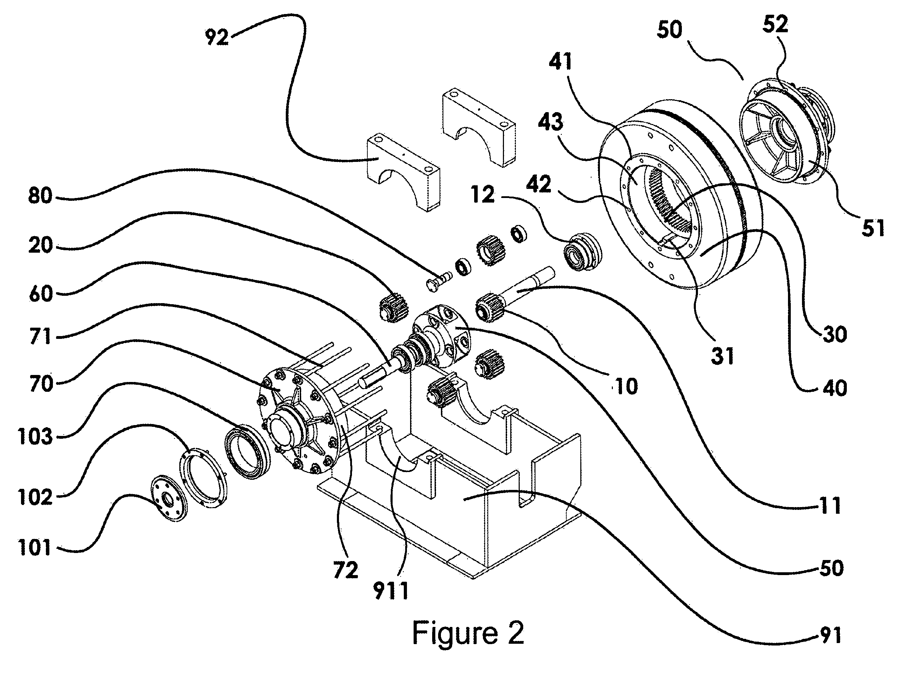

In Figure 2, the exploded view of the subject matter power transmission mechanism is given.

In Figure 3, the cross sectional view of the subject matter power transmission mechanism is given.

In Figure 4, the frontal view of the subject matter power transmission mechanism is given.

### REFERENCE NUMBERS

- 10: Sun gear 11 Gear spindle
- 12: Bearing
- 20: Planet gear
- 30: Circular gear
- 31: Wedge
- 40: Flywheel
- 41: Assembly surface
- 42: Stud housing
- 43: Hub part
- 50: Rear flywheel cover
- 51: Support surface
- 52: Connection housing
- 60: Output spindle
- 70: Front flywheel cover
- 71: Stud
- 72: Support surface
- 80: Connection bar
- 90: Body
- 91: Body carcass
- 911: Bearing housing
- 92: Upper cap
- 100: Cover
- 101: Inner cover
- 102: Outer cover
- 103: Bearing
- 110: Planet carrier
- M1:: First drive means
- M2:: Second drive means

### THE DETAILED DESCRIPTION OF THE INVENTION

In this detailed explanation, the subject matter power transmission mechanism is explained with examples in order to make the subject matter more understandable without forming any restrictive effect. Accordingly, in the explanation below and in the subject matter figures, the subject matter invention is assumed to be applied in providing movement to the ram of a press. However, in alternative embodiments, the subject matter invention can also be used in any other field where power transfer is preferred with respect to the two inputs one output principle.

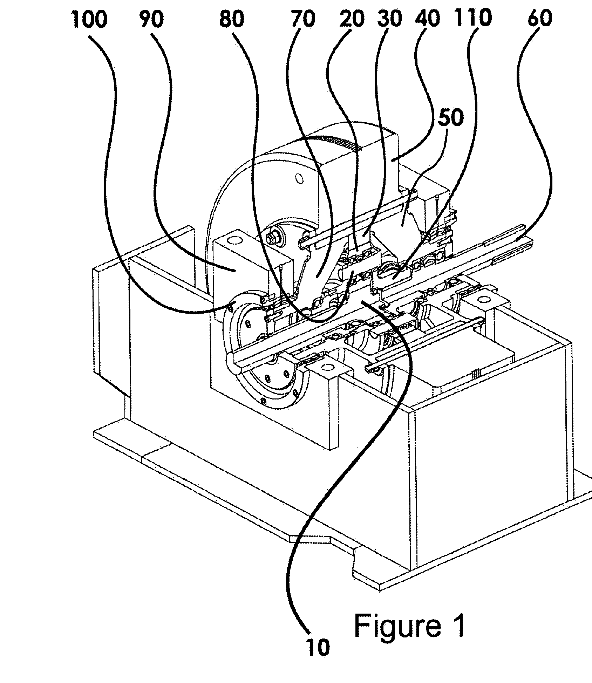

With reference to Figure 1, the subject matter mechanism is embodied on a body (90) comprising a body carcass (91) positioned at the bottom, and an upper cap (92) fixed onto the body carcass (91). Accordingly, in the subject matter mechanism, there is a flywheel (40) which is rotated around the own axis thereof by means of a drive mechanism (M2) and where a planet gear (20) is adapted to the hub part (43) thereof. In more details, the circular gear (30) of the planet gear (20) box is placed to the hub part (43) of the flywheel (40) and here, the rotation of it around the own axis thereof is prevented at least by means of a wedge (31).

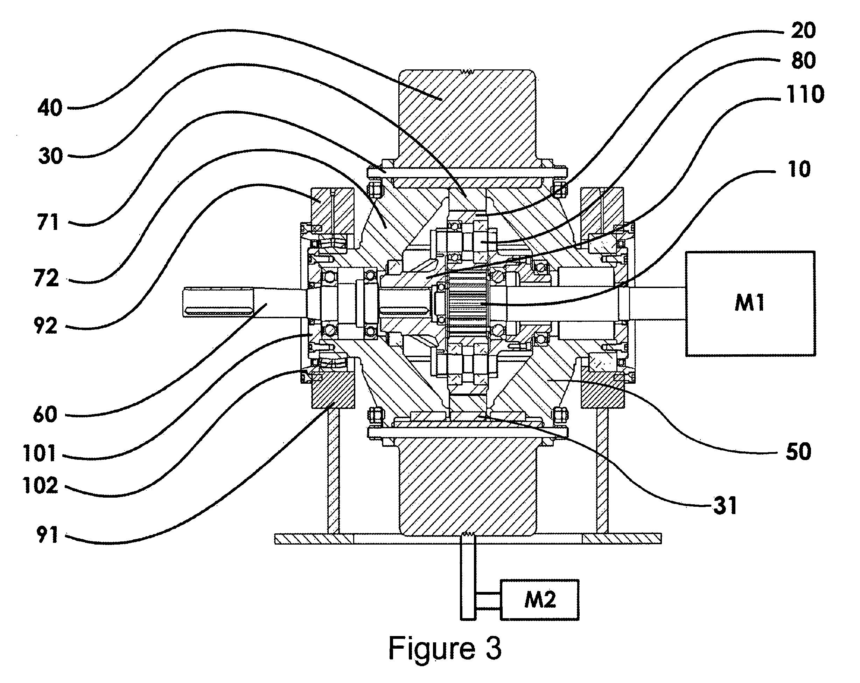

With reference to Figure 3, the displacement of the circular gear (30) in the horizontal direction is provided by rear and front flywheel covers (50, 70) which are fixed to the hub part (43) from the front part and the rear part respectively. Both the rear and the front flywheel covers (50, 70) have one each support surfaces (51, 72) extending axially. Thanks to this, after assembly, the circular gear (30) is tightened between two support surfaces (51, 72) and thereby it is fixed. In more details, there is a plurality of studs (71) which extend axially on the front flywheel cover (70) and which are positioned peripherally. On the lateral surface of the flywheel (40), an assembly surface (41) is formed which is in a circular step form and the studs (71) pass through the stud housings (42) which are positioned peripherally on said assembly surface (41) and they reach the connection housings (52) which are formed so as to correspond said studs (71) along the outer periphery of the rear flywheel cover (50). On the other side of the connection housings (52), the end of the studs (71) are tightened by means of nuts and thus the front and rear flywheel cover (50) is fixed to the flywheel (40). As a result of this, the circular gear (30) can be fixed inside the hub part (43) of the flywheel (40) in a firm manner and thus, the circular gear (30) rotates together with the flywheel (40). In an alternative embodiment of the subject matter invention, teeth are formed on the inner peripheral surface of the hub part (43) and a circular gear (30) is formed in that region which is one piece to the flywheel. Again in another alternative embodiment of the subject matter invention, the circular gear (30) can be integrated to the flywheel (40) so as not to be removed by means of the assembly methods known in the art.

On the other hand, the planet gear (20) box comprises the circular gear (30), a sun gear (10) placed in the center and four planet gears (20) whose thread are in contact with the teeth of said sun gear (10) and the teeth of the circular gear (30) and which is connected rotatably to the planet carrier (110) by means of one each connection bars (80). The spindle (11) of the sun gear (10) is bedded inside the planet carrier (110) by means of bearings (12). Both the sun gear (10) and the planet gears (20) are positioned on a planet carrier (110) whereon an output spindle (60), which is a work spindle defining the system output, is connected in a concentric manner. Inside the mechanism, the planet carrier (110) can rotate around itself in a free manner. Thus, rotation freedom is provided between the planet carrier (110), flywheel (40) and the sun gear (10).

The subject matter mechanism is rotatably connected to the body (90) by means of bearings (103) which are placed to two bearing housings (911) which are formed mutually on the body carcass (91). In more details, in the front side, a bearing (103) which is connected to the front flywheel cover (70) is placed to the front bearing housing (911), and at the rear side, another bearing (not illustrated in the figure) which is connected to the rear flywheel cover (50) is placed to the rear bearing housing (911). As a structural detail, an inner and an outer cover (101, 102) are connected to the outfacing surface of the bearing (103).

Under the light of the structural details, the operation of the subject matter invention is as follows. The spindle (11) of the sun gear (10) which has rotation freedom between the planet carrier (110) and itself is rotated around itself by the first drive means (M1). The flywheel (40) and the circular gear (30) which is connected to the flywheel (40) so as not to have rotation freedom are rotated by the second drive means (M2). In this preferred embodiment of the subject matter invention, the first drive means (M1) is selected as the servo motor and the second drive means (M2) is selected as normal AC motor. Accordingly, the revolutions and the torque obtained from these two motors (M1, M2) depending on the gear ratios are combined thanks to this system and they are transferred to the press's crank spindle (not illustrated in the figure) from said output spindle (60) which is connected to the planet carrier (110).

In a preferred embodiment of the subject matter invention, during operation, the AC motor which is the second drive means (M2) rotates at a constant revolution and it provides the flywheel (40) to accumulate energy like in classical presses. On the other hand, thanks to the servo motor which is the first drive means (M1), the movements of the press ram table are controlled and this provides the realization of speed control. In such a system, in principle, half of the total crank moment is provided by the torque obtained from the energy accumulated in the flywheel (40), the other half is provided from the torque produced by the first drive means (M1). Thanks to this, for instance, for a servo press requiring 250 kW motor power, when the subject matter system is used, using a servo motor with power 125 kW and an AC motor with power 30 kW, the same pressing process and the same speeds can be obtained and this means an energy gain of 38 %.

In the alternative embodiments of the subject matter invention, instead of controlling the servo motor which is the first drive means (M1), the press can also be operated by controlling only the first drive means (M1) or both the first and second drive means (M2) at the same time.

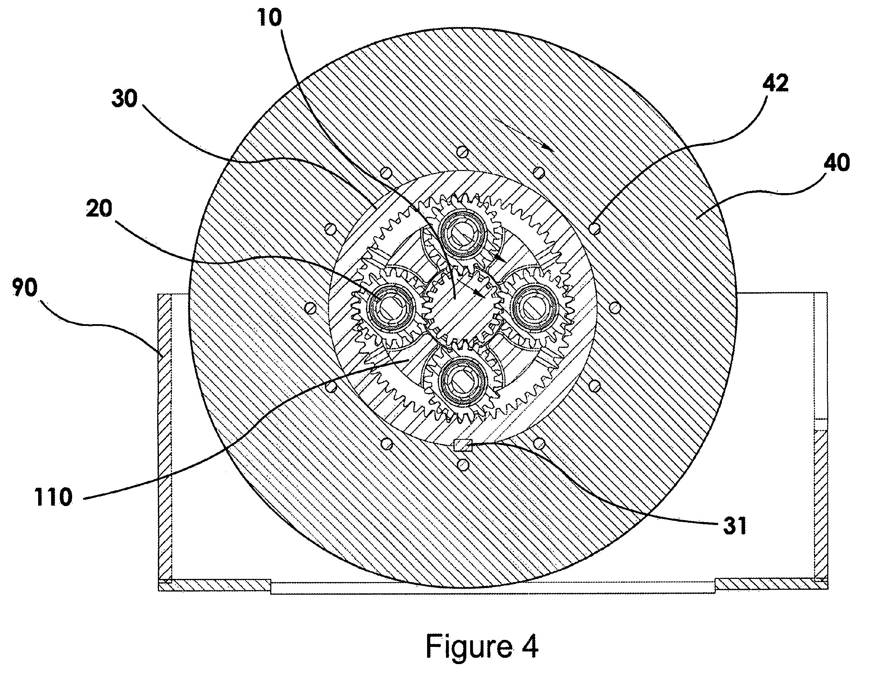

An exemplary operation style of the subject matter invention is as follows under the light of Figure 4. For instance, when the flywheel (40) and the sun gear (10) are rotated clockwise, maximum revolution is obtained from the output spindle (60). When the servo motor which is the first drive means (M1) is moved in the counter-clockwise direction, the output can be decreased to very low speeds, and the movement thereof can be stopped. Thus, thanks to the subject matter system, the speed of the press ram table can be adjusted to the desired ram position and in a certain speed interval, depending on the gear ratios of the sun gear, planet gear and circular gear to be used. In an alternative embodiment of the subject matter invention, by means of a clutch-brake which can be positioned between the servo motor (M1) and the sun gear spindle (11), a press comprising the subject matter power transmission mechanism can be used both as a press with servo motor and as a press with classical flywheel (40).

In another alternative embodiment of the subject matter invention, the sun gear (10) output charges a unit which stores electrical energy. When desired, said unit is used for supplying energy to the AC motor (M2) which drives the flywheel.

As a result, in current planetary gear systems, one of the sun gear, planet gear (20) or the circular gears is used as fixed. However, thanks to the subject matter two inputs one output mechanism, the output is controlled by two different motors. At the same time, since the circular gear (30) is fixed to the flywheel (40), the dimensions of all of the mechanism are decreased and a more compact mechanism can be obtained. On the other hand, since no clutching mechanism is required in the system, less number of pieces is used and since no noise is produced, a much more silent mechanism is obtained.

## Claims

1. A movement transformation mechanism where independent power transfer can be realized to a work spindle (60) from two separate drive sources (M1, M2), comprising a flywheel (40) rotated by the first drive source; a circular gear (30) fixed to a hub part (43) of said flywheel (40); a sun gear (10) rotated by means of the second drive source; at least one planet gear (20) which is positioned between said circular gear (30) and the sun gear (10); and a planet carrier (110) which carries said sun gear (10) and said planet gear (20) and which is rotatably connected to sun gear (10) and to the flywheel (40), said mechanism **characterized in that** it comprises at least one wedge (31) in order to provide the fixation of the circular gear (30) to the flywheel so that the circular gear does not rotate around the own axis thereof and, in order to fix the circular gear (30) inside the hub part (43) of the flywheel (40), a front flywheel cover (70) which is placed to the hub part (43) from the front side and which has a support surface (72) rested onto the circular gear (30); and a rear flywheel cover (50) which is placed to the hub part (43) from the rear part and again which has a support surface (51) rested onto the circular gear (30).

2. A movement transformation mechanism according to Claim 1, **characterized in that** said front cap comprises studs (71) providing connection to the flywheel and correspondingly, the flywheel (40) comprises stud housings (42) through which said studs (71) pass.

3. A movement transformation mechanism according to Claim 2, **characterized by** comprising connection housings (52) whereon the studs (71) exiting the other end of said stud housings (42) are connected and which are embodied so as to correspond to the studs (71) on the rear flywheel cover (50).

4. A movement transformation mechanism according to any of the preceding claims, **characterized by** comprising at least three planet gears (20) which are positioned peripherally so as not to contact with each other.

5. A movement transformation mechanism according to any of the preceding claims, **characterized in that** the first drive source (M1) is a servo motor, the second drive source (M2) is an AC motor.

6. A press with a movement transformation mechanism according to any of the preceding claims.

## Patentansprüche

1. Eine Bewegungs-Umwandlungs-Vorrichtung, bei der unabhängige Leistungsübertragung von zwei separaten Antriebsquellen (M1, M2) auf eine Arbeitsspindel (60) verwirklicht werden kann, umfassend ein von der ersten Antriebsquelle rotiertes Schwungrad (40); ein Hohlrad (30), welches an einem Nabenteil (43) des genannten Schwungrades (40) fixiert ist; ein Sonnenrad (10), das durch die zweite Antriebsquelle rotiert wird; mindestens ein Umlaufrad (20), welches zwischen genanntem Hohlrad (30) und dem Sonnenrad (10) positioniert ist; und einen Planetenträger (110), welcher das genannte Sonnenrad (10) und das genannte Umlaufrad (20) trägt und drehbar mit dem Sonnenrad (10) und dem Schwungrad (40) verbunden ist, wobei die genannte Vorrichtung **dadurch gekennzeichnet ist, dass** sie mindestens einen Keil (31) umfasst, um die Fixierung des Hohlrades (30) am Schwungrad bereitzustellen, damit das Hohlrad nicht um die Achse desselben rotiert und, um das Hohlrad (30) in dem Nabenteil (43) des Schwungrades (40) zu fixieren, und eine vordere Schwungradabdeckung (70), welche von der Vorderseite aus an das Nabenteil (43) platziert ist und eine auf dem Hohlrad (30) ruhende Stützfläche (72) aufweist; und eine hintere Schwungradabdeckung (50), welche vom hinteren Teil aus an das Nabenteil (43) platziert ist und welche wiederum eine auf dem Hohlrad (30) ruhende Stützfläche (51) aufweist.

2. Eine Bewegungs-Umwandlungs-Vorrichtung gemäß Anspruch 1, **dadurch gekennzeichnet, dass** genannte vordere Kappe Niete (71) umfasst, welche eine Verbindung zum Schwungrad bereitstellen und entsprechend, dass das Schwungrad (40) Niethülsen (42) umfasst, durch welche genannte Niete (71) hindurchgehen.

3. Eine Bewegungs-Umwandlungs-Vorrichtung gemäß Anspruch 2, **dadurch gekennzeichnet, dass** sie Verbindungshülsen (52) umfasst, mit denen die Niete (71), die aus dem anderen Ende genannter Niethülsen (42) herauskommen, verbunden sind und welche derart ausgeführt sind, dass sie den Nieten (71) auf der hinteren Schwungradabdeckung (50) entsprechen.

4. Eine Bewegungs-Umwandlungs-Vorrichtung gemäß irgendeinem der vorhergehenden Ansprüche, **dadurch gekennzeichnet, dass** sie mindestens drei Umlaufräder (20) umfasst, welche derart peripher positioniert sind, dass sie nicht miteinander kontaktieren.

5. Eine Bewegungs-Umwandlungs-Vorrichtung gemäß irgendeinem der vorhergehenden Ansprüche, **dadurch gekennzeichnet, dass** die erste Antriebsquelle (M1) ein Servomotor ist, und dass die zweite Antriebsquelle (M2) ein Wechselstrommotor ist.

6. Eine Presse mit einer Bewegungs-Umwandlungs-Vorrichtung gemäß irgendeinem der vorhergehenden Ansprüche.

## Revendications

1. Mécanisme de transformation de mouvement dans lequel un transfert de puissance indépendant peut être réalisé vers une broche de travail (60) à partir de deux sources d'entraînement séparées (M1, M2), comprenant un volant d'inertie (40) entraîné en rotation par la première source d'entraînement ; une couronne (30) fixée à une partie moyeu (43) dudit volant d'inertie (40) ; un pignon planétaire (10) entraîné en rotation au moyen de la seconde source d'entraînement ; au moins un pignon satellite (20) qui est positionné entre ladite couronne (30) et le pignon planétaire (10) ; et un porte-satellites (110) qui porte ledit pignon planétaire (10) et ledit pignon satellite (20) et qui est relié à rotation au pignon planétaire (10) et au volant d'inertie (40), ledit mécanisme étant **caractérisé par le fait qu'**il comprend au moins un coin (31) afin d'assurer la fixation de la couronne (30) au volant d'inertie de telle sorte que la couronne ne tourne pas autour de son propre axe et, afin de fixer la couronne (30) à l'intérieur de la partie moyeu (43) du volant d'inertie (40), un flasque avant de volant d'inertie (70) qui est placé sur la partie moyeu (43) depuis le côté avant et a une surface de support (72) reposant sur la couronne (30) ; et un flasque arrière de volant d'inertie (50) qui est placé sur la partie moyeu (43) depuis la partie arrière et a également une surface de support (51) reposant sur la couronne (30).

2. Mécanisme de transformation de mouvement selon la revendication 1, **caractérisé par le fait que** ledit flasque avant comprend des goujons (71) fournissant une liaison au volant d'inertie et, de manière correspondante, le volant d'inertie (40) comprend des logements de goujon (42) à travers lesquels lesdits goujons (71) passent.

3. Mécanisme de transformation de mouvement selon la revendication 2, **caractérisé par le fait qu'**il comprend des logements de liaison (52) auxquels les goujons (71) sortant de l'autre extrémité desdits logements de goujon (42) sont reliés et qui sont réalisés sur le flasque arrière de volant d'inertie (50) de manière à correspondre aux goujons (71).

4. Mécanisme de transformation de mouvement selon l'une quelconque des revendications précédentes, **caractérisé par le fait qu'**il comprend au moins trois pignons satellites (20) qui sont positionnés de manière périphérique de façon à ne pas venir en contact les uns avec les autres.

5. Mécanisme de transformation de mouvement selon l'une quelconque des revendications précédentes, **caractérisé par le fait que** la première source d'entraînement (M1) est un servomoteur, la seconde source d'entraînement (M2) est un moteur à courant alternatif.

6. Presse ayant un mécanisme de transformation de mouvement tel que défini à l'une quelconque des revendications précédentes.
